# FASCICULE DE BREVET EUROPEEN

(11) **EP 3 481 617 B1**
(45) Date de publication et mention de la délivrance du brevet: **16.09.2020**
(21) Numéro de dépôt: 17742827.3
(22) Date de dépôt: 07.07.2017
(51) Int. Cl.: B29C 49/42, B29C 49/78, B29C 49/06, B29C 49/36, B29C 49/58, B29K 67/00, B29L 31/00

(54) **PROCEDE DE FABRICATION DE RECIPIENTS EN PLASTIQUE PAR SOUFFLAGE**
VERFAHREN ZUR HERSTELLUNG EINES KUNSTSTOFFBEHÄLTERS DURCH BLASFORMUNG
METHOD FOR MANUFACTURING PLASTIC CONTAINERS BY BLOW MOULDING

(30) Priorité: 11.07.2016 FR 1656641
(43) Date de publication de la demande: 15.05.2019
(73) Titulaire: Sidel Participations, 76930 Octeville-sur-Mer (FR)
(72) Inventeur: DELAUNAY, Arnaud, 76930 Octeville-sur-Mer (FR); PASQUIER, Hervé, 76930 Octeville-sur-Mer (FR)
(74) Mandataire: Sidel Group
(86) Numéro de dépôt international: PCT/FR2017/051857
(87) Numéro de publication internationale: WO 2018/011490

(56) Documents cités:
- EP-A2- 1 306 195
- DE-A1-102008 052 609
- US-A- 3 865 913
- US-A1- 2015 321 412

## Description

L'invention a trait à la fabrication de récipients en matière plastique à partir d'ébauches, par exemple des bouteilles en polyéthylène téréphtalate (PET). Les documents EP1306195A2, DE10 2008 052609A1 et US2015/321412A1 sont illustratifs de l'arrière plan technologique. Le document EP1306195A2 décrivant un procédé pour former en récipients des ébauches en matière plastique, le procédé comprenant un cycle d'étapes incluant au moins des étapes où on souffle dans les ébauches de façon à les former en récipients puis on dégaze intérieurement les récipients formés, lesdites étapes sont opérées suivant un premier cycle à une première cadence.

Est ainsi concerné un procédé pour transformer en récipients des ébauches, typiquement des préformes, en matière plastique.

Le procédé selon l'invention comprend un cycle d'étapes incluant au moins une étape où du fluide de soufflage sous pression, typiquement de l'air, est injecté dans les ébauches de façon à les transformer en récipients, puis une étape où on dégaze intérieurement les récipients formés.

Pour former ces récipients, il est conventionnel d'utiliser une machine de soufflage (dite aussi souffleuse ou machine de soufflage, ou machine d'étirage-soufflage) pourvue d'une série de postes de soufflage ou d'étirage-soufflage comprenant des moules de formage disposés à la périphérie d'un carrousel.

Dans l'art antérieur, de telles machines de soufflage fonctionnent typiquement avec une cadence de sortie nominale constante. Cependant, une vitesse de sortie constante peut conduire à des inconvénients, en particulier si la machine de soufflage est, comme souvent, installée en amont d'une ligne de fabrication et de conditionnement, comprenant, par exemple des machines aval de remplissage, de bouchage, d'étiquetage, etc...

Dans ce cas, les différentes machines de fabrication et/ou de conditionnement sont reliées dynamiquement les unes aux autres, typiquement par l'intermédiaire de roues de transfert en étoile. Ainsi, les cadences de sortie des différentes machines sont dépendantes les unes des autres. Or, il serait souvent avantageux que certaines machines ou blocs de machines puissent être ralentis ou accélérés selon les besoins, par exemple en cas de panne de l'une des machines suivantes. Mais, ceci est a minima compliqué et onéreux (nécessité de la présence de zones tampon qui stockent temporairement des récipients), en particulier si la machine de soufflage est utilisée comme la machine de tête qui commande la cadence de toute la ligne de fabrication et de conditionnement.

US 8936458 propose que, sur une machine de soufflage, un dispositif de commande agisse de façon que les étapes de formation des récipients soient exécutées indépendamment de l'emplacement des ébauches le long de leur trajet de déplacement, de telle sorte que la cadence de sortie de ces récipients soit variable. En l'espèce les ébauches sont des préformes.

Quant à EP 2537664, il propose une modification de la cadence de chauffe d'ébauches en matière plastique.

Toutefois, ces solutions n'apparaissent pas suffisantes pour s'assurer d'une qualité adaptée de la production lors d'une variation de cadence, et en particulier éviter que des récipients mal formés ou avec des dimensions différentes les uns des autres se coincent dans la ligne de production et ne génèrent des arrêts en ligne, voire altèrent la qualité ou quantité de production pour le client et/ou le consommateur final.

Aussi est-il ici proposé que le procédé précité, qui permet donc de former en récipients des ébauches en matière plastique, via un cycle d'étapes incluant au moins des étapes où on souffle dans les ébauches de façon à les former en récipients puis on dégaze intérieurement les récipients formés, soit en outre tel que :
- on opère lesdites étapes suivant un premier cycle à une première cadence, puis,
- lors d'un second cycle postérieur d'étapes s'opérant à une seconde cadence inférieure à la première cadence, on débute les étapes au même instant que pour le premier cycle et on ajoute une temporisation par rapport au premier cycle, pendant ou après le dégazage, de sorte que le second cycle est temporellement allongé par rapport au premier.

Ainsi, on pourra disposer d'un intervalle de temps tampon adapté pour compenser la variation des temps de cycle entre les deux cycles.

De la sorte, puisque, par la diminution de cadence d'un cycle initial d'étapes, le cycle ralenti est temporellement plus long que le cycle initial, la temporisation ajoutée au cycle ralenti permet que la qualité des récipients formés ne soit pas affectée : elle permet en effet de garder constantes la durée et le cadencement des étapes essentielles du soufflage (pré-soufflage, soufflage) : en d'autres termes, la courbe de soufflage n'est pas affectée.

En conséquence, sur une ligne complète de production, il sera possible d'obtenir un fonctionnement en continu d'étapes ultérieures de conditionnement des récipients formés.

Etant donné que la temporisation interviendra pendant ou après le dégazage, on pourra trouver approprié que, pendant cette temporisation, l'intérieur des récipients formés soit à la pression atmosphérique.

En effet, l'étape de dégazage dans le contexte ci-avant comprenant un dégazage du fluide de soufflage sous pression (typiquement de l'air) par sa mise à l'air libre, on pourra donc profiter de cette mise à l'air pour prolonger la phase de dégazage, sans que cela affecte une autre opération plus critique de formage, telle que le soufflage, ou un éventuel pré-soufflage et/ou un étirage (avant soufflage et donc éventuel pré-soufflage).

Par ailleurs, il pourra être préféré que, lors du second cycle à cadence réduite, on maintienne (au moins) à l'étape de soufflage la même durée que celle de l'étape de soufflage du premier cycle.

Et si chaque étape de soufflage inclut (débute par) un pré-soufflage, on pourra maintenir à l'étape de pré-soufflage du second cycle la même durée que celle de l'étape de pré-soufflage du premier cycle.

Lors d'une variation de cadence de la machine de soufflage, en production, le temps de cycle de soufflage varie en fonction de la vitesse de rotation de la machine. Ce phénomène génère une variation du temps de maintien sous pression des récipients dans les moules de soufflage, ce qui entraine des variations de volumes et de prises d'empreintes et donc peut altérer la qualité des récipients. En effet, habituellement, lors d'un changement de vitesse de rotation, les temps de pré-soufflage (si prévu), de dégazage et les temps morts (temps où la tuyère coiffe le moule pour souffler le récipient restent fixes. Seul le temps de soufflage varie. C'est alors lui qui compense la variation de temps de cycle.

Maintenir sur des cycles à cadences différentes les mêmes temps pour le soufflage, voire l'éventuel pré-soufflage, sera donc utile à un maintien de la qualité des récipients.

Concernant les cycles de fabrication, il sera par ailleurs favorablement prévu qu'un dit cycle d'étapes, typiquement réalisé sur une machine de soufflage, comprenne :
- une étape où on placera dans certains moules individuels, alors libres, des ébauches préalablement chauffées, et on fermera ces moules,
- puis ladite étape soufflage où on soufflera les ébauches préchauffées, pour obtenir des récipients avec, possiblement incluse, une étape de pré-soufflage où on soufflera dans les ébauches préchauffées à une pression inférieure à la pression de soufflage,
- puis ladite étape de dégazage où on dégazera intérieurement les récipients obtenus,
- puis une étape où on ouvrira les moules des récipients dégazés et on en retirera lesdits récipients.

De préférence, sur une telle machine de soufflage où sera opéré tout le procédé, on maintiendra en outre pour chacune des étapes dudit second cycle autres que celle de dégazage, les mêmes temps que ceux réservés à chacune de ces mêmes étapes lors du premier cycle d'étapes à la première cadence (plus élevée).

Lors d'une variation de la cadence de la machine de soufflage, tous les temps de cycle avant et après dégazage pourront donc rester fixes avec, pour l'étape de dégazage, soit une durée qui variera, soit un temps tampon qui sera ajouté à l'issue du dégazage. Ainsi, une zone tampon sera créée après la phase de soufflage, ce tampon permettant de compenser la variation du temps de cycle, sans altérer la qualité des récipients formés. En effet, les temps de cycle réservés à chaque étape étant identiques, à cadence élevée et à cadence réduite, indépendamment du temps de cycle total, la courbe de soufflage demeurera identique et donc la qualité des récipients aussi. Un système de contrôle basé sur l'analyse de la courbe de soufflage pourra permettre de s'assurer que la courbe de soufflage reste effectivement identique malgré cette variation de la cadence.

D'un point de vue pratique, il est conseillé :
- d'opérer les étapes d'un cycle d'étapes complet de fabrication sur une machine de soufflage à carrousel rotatif et à moules individuels multiples répartis à sa périphérie,
- et ceci de préférence sur un quasi tour du carrousel.

Outre la formation de récipients en plastique, est aussi ici concerné un procédé pour produire, suivant lesdits deux cycles d'étapes, de tels récipients remplis, bouchés et/ou étiquetés.

Grâce au procédé de mise en forme précité, il va en effet être possible d'appliquer auxdits récipients formés :
- une étape de remplissage,
- puis une étape de bouchage,
- et/ou une étape d'étiquetage de ces récipients, avec :
- lors tant du premier que du second cycle d'étapes, un fonctionnement en continu des étapes de bouchage, remplissage et/ou étiquetage.

Et il a même été possible que la cadence du premier cycle d'étapes corresponde à la cadence maximale admissible par la machine de soufflage.

De façon générale ces solutions de l'invention vont permettre d'éviter que des récipients mal formés, ou avec des dimensions différentes de celles requises, se coincent dans la ligne de production et ne génèrent des arrêts de ligne, la cadence de production de la machine de soufflage variant en fonction de la cadence de l'ensemble de la ligne de production, afin de s'adapter aux contraintes de cette dernière.

Si nécessaire, l'invention sera encore mieux comprise et d'autres caractéristiques, détails et avantages de celle-ci apparaîtront encore à la lecture de la description qui suit, faite à titre d'exemple non limitatif et en référence aux dessins annexés, dans lesquels :
- la figure 1 est une vue schématique en plan montrant une machine de soufflage pour la fabrication de récipients comprenant une unité de chauffe d'ébauches et une unité de soufflage de récipients à partir des ébauches chauffées ;
- la figure 2 est une vue schématique complétant la figure 1, avec des unités de bouchage, remplissage et/ou étiquetage disposées en aval de l'unité de soufflage de la figure 1 ;
- la figure 3 est une vue schématique en coupe montrant partiellement la machine de soufflage de la figure 1, à l'endroit d'un moule ;
- et les figures 4 et 5 sont des graphes schématiques respectivement d'un premier cycle d'étapes dans une machine ou unité de soufflage et d'un second cycle d'étapes dans la même machine, mais à cadence réduite. Si entre les deux graphes les durées par exemple de la phase de soufflage semblent différentes alors qu'elles sont identiques ici, c'est du fait du temps total du cycle complet (un tour de graphe) qui est plus long figure 5, ce qui fait varier les proportions entre elles des phases successives.

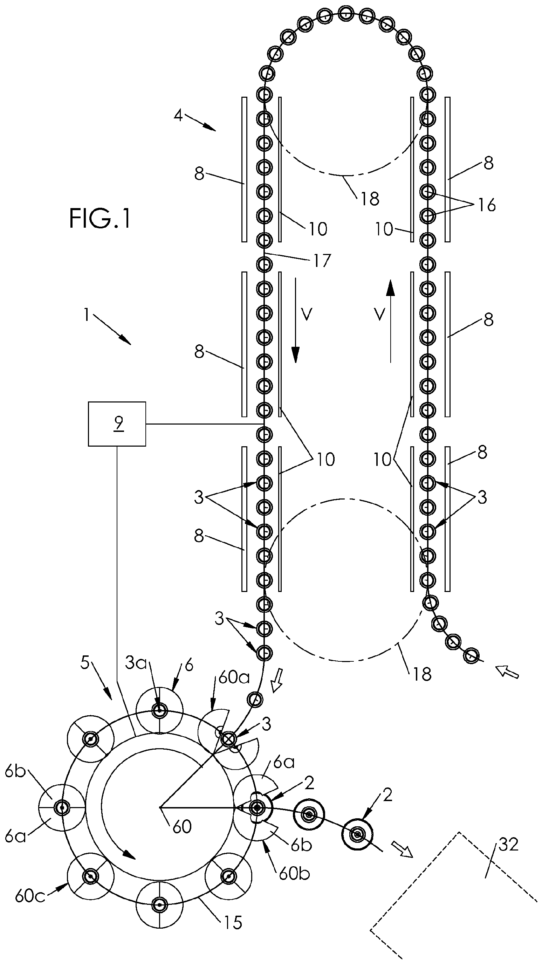

La figure 1 schématise une machine 1 de fabrication de récipients 2, tels des bouteilles ou flacons, par soufflage ou étirage-soufflage d'ébauches 3 (généralement des préformes, bien qu'il puisse s'agir de récipients intermédiaires) en matériau thermoplastique, tel que du polyéthylène téréphtalate.

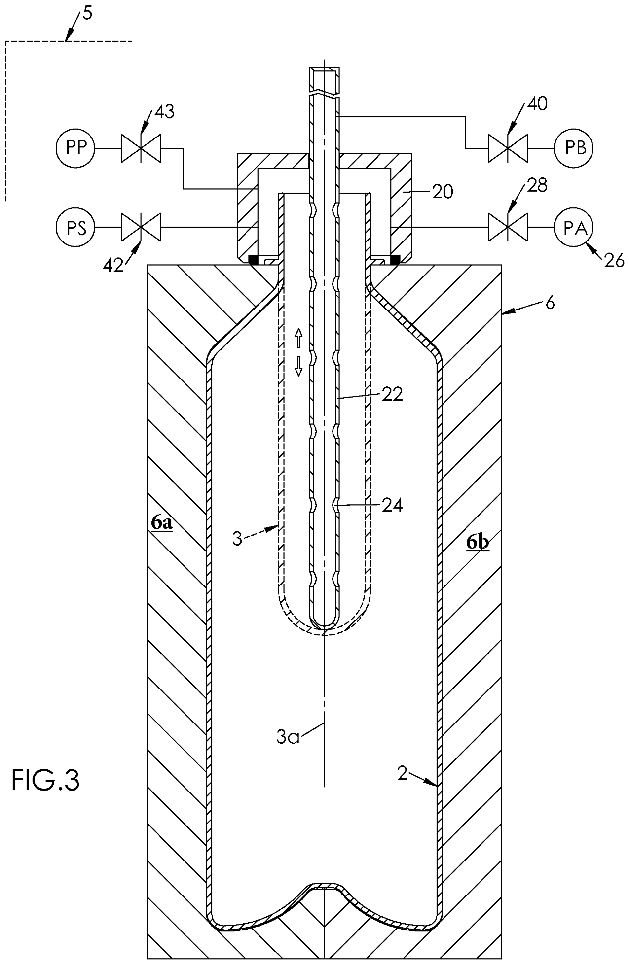

La fabrication d'un récipient 2 comporte deux phases principales :
- la fabrication préalable, dans un moule d'injection (non représenté), de l'ébauche 3, de forme tubulaire, à partir de matière plastique ;
- puis, dans un moule 6 d'une unité 5 de soufflage ou d'étirage-soufflage de la machine 1, l'injection d'un gaz comprimé (tel de l'air) à l'intérieur de l'ébauche 3 préalablement chauffée ; la matière s'étire alors, vient se plaquer contre l'empreinte et épouse la forme du moule 6 (voir figure 3, avec l'ébauche 3 en pointillés qui évolue vers le récipient 2 en trait plein).

Ensuite, le moule 6 est ouvert et le récipient 2 est sorti de l'unité 5 de soufflage.

Lors de la première phase, qui comprend un chauffage de l'ébauche 3 par défilement d'une succession d'ébauches dans une unité 4 de chauffe, (couramment appelée « four »), les ébauches défilent devant une rangée de sources 8, 10 de rayonnement infrarouge - typiquement des lampes halogènes ou des émetteurs lasers -, à une vitesse de défilement et selon un profil de chauffe prédéterminés. La vitesse de défilement du four est la vitesse linéaire à laquelle circulent les préformes, qui sont accrochées à des supports tournants ou « tournettes » montées sur une chaîne 17 entraînée en mouvement par une roue 18. Chaque tournette est entraînée en rotation autour d'un axe 16 solidaire de la chaine 17, elle-même entraînée en déplacement par une ou plusieurs roues 18 dont la motorisation est pilotée par une centrale 9 de commande.

La modification de la vitesse de défilement des ébauches 3 entraine une modification de leur temps d'exposition devant les sources de rayonnement. Par conséquent, cette modification de la vitesse de défilement nécessite une modification des paramètres de chauffe des ébauches 3 afin de maintenir un profil de chauffe identique de l'une à l'autre et ce malgré la modification de vitesse de défilement.

Typiquement, les opérateurs spécialisés ayant la charge des fours appliquent pour chaque gamme de production un profil de chauffe standardisé en fonction du type d'ébauche à chauffer, et d'une cadence de chauffe (c'est-à-dire une vitesse de défilement des préformes) constante déterminée par la cadence de production imposée par la machine critique, typiquement l'unité 5 de soufflage.

Dans une réalisation alternative, l'unité 4 de chauffe se constitue d'émetteurs lasers qui émettent dans le domaine de l'infrarouge. Ce type d'unité 4 de chauffe a pour avantage de ne pas avoir d'inertie thermique par rapport aux lampes infrarouge et permet donc d'adapter en temps réel le profil de chauffe de l'ébauche 3 à la modification de la vitesse.

Sortant de l'unité 4 de chauffe sur leur convoyeur, les ébauches 3 chauffées subissent un soufflage ou un étirage soufflage, avec un possible pré-soufflage, au sein de l'unité 5 de soufflage.

Cette unité 5 de soufflage est placée directement en sortie de l'unité 4 de chauffe. Elle est munie d'une série de moules 6, 60a, 60b..., qui font chacun partie d'une station de soufflage de l'unité. Comme expliqué ultérieurement, une station, outre un moule, comporte une tige d'étirage, une tuyère de soufflage et des moyens de connexion fluidique de la station à des sources de gaz sous pression.

Peut donc s'y dérouler, sous le contrôle de la centrale 9 de commande et dans chaque moule 6, un soufflage lors duquel un fluide sous pression (généralement un gaz, ordinairement de l'air) est injecté dans l'ébauche 3 chaude qui y a été chargée, pour lui conférer la forme finale du récipient 2.

Dans l'exemple, l'unité 5 de soufflage est une unité d'étirage-soufflage, particulièrement adaptée à la fabrication de bouteilles.

Sur cette unité 5 de soufflage, ici de type carrousel rotatif, les moules 6, 60a, 60b... de soufflage sont montés à la périphérie d'un carrousel 15 qui est entraîné de manière continue en rotation autour d'un axe 60. Un capteur est typiquement prévu pour suivre la position angulaire instantanée du carrousel, sous forme par exemple d'un codeur (en pratique, souvent un roulement instrumenté).

Un moule de soufflage peut comprendre deux parties 6a, 6b mobiles l'une par rapport à l'autre, de façon linéaire ou en portefeuille (solution schématisée), entre deux positions, l'une fermée, autour d'une ébauche puis d'un récipient (moule 60c), et l'autre ouverte, pour laisser une ébauche entrer ou un récipient sortir (moules 60a, 60b respectivement). De préférence, un moule comporte en outre une troisième partie constituant un fond 7 de moule, mobile en translation axiale par rapport aux deux premières parties 6a, 6b. La mobilité axiale du fond 7 de moule favorise le démoulage du récipient. En position fermée, chaque cavité définie par les deux parties 6a, 6b et le fond 7 de moule forme l'empreinte du récipient 2 à souffler, comme montré figure 3.

Sous le contrôle coordonné de la centrale 9 de commande, l'unité 5 de soufflage est telle que chaque station de soufflage fonctionne de manière cyclique selon un cycle de soufflage comprenant les étapes suivantes :
- une étape de placement de l'ébauche 3 arrivante dans le moule 6, 60a, 60b qui, figure 1, se présente ouvert face à elle ;
- une étape de fermeture du moule de soufflage (position juste à gauche du moule 60a figure 1) ;
- une étape de soufflage de l'ébauche par l'intermédiaire d'une tuyère 20 (figure 3) de soufflage (avec éventuel pré-soufflage) de fluide dans l'ébauche, la tuyère venant alors coiffer le moule 6 fermé, cette étape de soufflage incluant, de manière sensiblement simultanée, une étape d'étirage de l'ébauche par insertion axiale (axe 3a du moule, parallèle à l'axe 60) d'une tige 22 d'étirage à l'intérieur de l'ébauche en prenant appui contre le fond de l'ébauche, de manière à faciliter l'allongement axial de cette ébauche ;
- une étape de dégazage à l'air ambiant de l'intérieur du récipient à l'atmosphère. En variante cette étape peut être complétée par un balayage de l'intérieur du récipient 2 par un fluide à pression intermédiaire entre la pression de soufflage et l'ambiante, par exemple par injection d'air à travers une pluralité d'orifices 24 prévus dans la tige 22 d'étirage, afin de refroidir le récipient pour faciliter son décollage de l'empreinte de la cavité du moule 6 de soufflage, cette étape se terminant en toute hypothèse par une mise à l'air 26 ambiant de l'intérieur du récipient, via une vanne 28 commandée par la centrale 9 de commande, comme le sont les autres vannes 40, 42, 43 citées ci-après ;
- une étape de remontée axiale de la tige 22 d'étirage hors du récipient formé, ainsi que la remontée de la tuyère 20, pour en permettre la sortie ;
- une étape de saisie du récipient 2 par des moyens de préhension extérieurs ;
- une étape d'ouverture du moule de soufflage (moule 60b figure 1) a priori juste avant que le carrousel 15 ait effectué un tour complet autour de son axe 60, l'ouverture consistant à écarter les deux parties 6a, 6b et le fond 7 de moule relativement l'une par rapport à l'autre ;
- une étape d'extraction du récipient 2 à l'issue de l'ouverture du moule.

Ainsi, sur un carrousel rotatif, deux moules (60a, 60b figure 1) adjacents (qui se suivent) peuvent être ouverts, l'un pour charger une ébauche 3, l'autre pour décharger un récipient 2, tous les autres moules, intermédiaires entre eux, servant à conduire les étapes de soufflage (avec éventuel pré-soufflage et/ou étirage) puis dégazage (avec possible balayage dans le cadre d'un process HR heat resistance/haute résistance).

Dans une machine de soufflage notamment de récipients, chaque ébauche 3 peut comprendre un corps, généralement cylindrique de révolution, un col à une extrémité axiale, qui constitue le buvant du récipient à former, et un fond, généralement hémisphérique, qui ferme le corps à l'extrémité axiale opposée au col. Préalablement chauffée dans l'unité 4 de chauffe à une température supérieure à la température de transition vitreuse de la matière (environ 80°C dans le cas du PET), la matière de cette ébauche, ramollie par la chauffe, forme une bulle qui croit et se développe à la fois suivant une direction axiale, parallèle à l'axe 3a principal du moule, et suivant une direction radiale, perpendiculaire à l'axe du moule. L'étirage axial de l'ébauche par une tige déplaçable axialement dans le moule permet d'éviter un désaxement du récipient et d'assurer une bonne équi-répartition de la matière.

En sortie de l'unité 5 de soufflage, la fabrication proprement dite des récipients 2 est terminée.

Toutefois, les unités (machines) de chauffe et de soufflage font généralement partie d'une ligne 30 de production qui comprend également, en aval de l'unité 5 de soufflage, une unité 32 de remplissage (ou remplisseuse), associée à une unité 34 de bouchage, et/ou éventuellement une unité 36 d'étiquetage et/ou une unité 38 de fardelage (par exemple une fardeleuse).

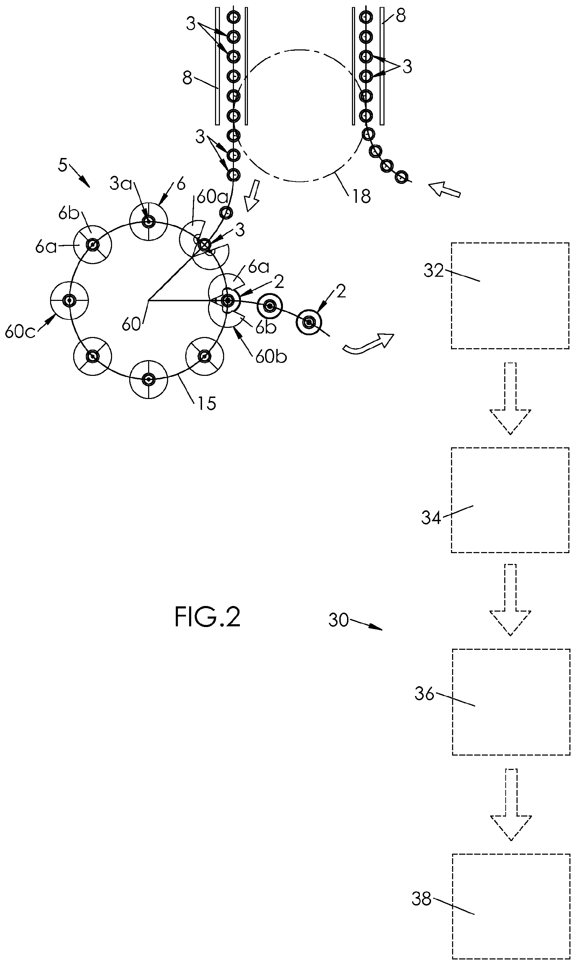

Si elles existent (voir figure 2) :
- l'unité 32 de remplissage (ou remplisseuse) reçoit des récipients 2 et les remplit. Elle peut inclure une unité de rinçage des récipients avant remplissage, qui est munie de bras injectant une solution de rinçage, par exemple chlorée, dans les récipients pour leur lavage et aussi leur désinfection. L'eau de rinçage est recueillie dans un bac de récupération,
- l'unité 34 de bouchage pose et ferme des bouchons sur des récipients 2 remplis,
- l'unité 36 d'étiquetage place et colle des étiquettes sur le corps de récipients 2 possiblement préalablement remplis et bouchés, et
- l'unité 38 de fardelage regroupe une série de récipients 2 possiblement préalablement remplis et bouchés et/ou d'étiquetés et les solidarise ensemble, avec un lien qui typiquement les entoure et les serre, tel qu'un film thermo-rétractable.

De manière alternative, les unités de remplissage, de bouchage, d'étiquetage, de fardelage peuvent être positionnées dans un ordre différent que dans la ligne de production 30 décrite par la figure 2.

La ligne 30 de production peut typiquement entièrement fonctionner sous le contrôle coordonné de la centrale 9 de commande. Sa cadence (c'est-à-dire la vitesse de défilement des préformes puis des récipients formés) est normalement déterminée par la cadence imposée par la machine critique, souvent donc l'unité 5 de soufflage.

Or, il est typiquement approprié que tout ou partie des unités 32, 34, 36, 38 fonctionne en continu.

Afin de maintenir ce fonctionnement continu même si un problème de production des récipients 2 survient, c'est donc sur la cadence d'une partie du cycle d'étapes de l'unité 5 de soufflage que l'on va intervenir, en ralentissant la cadence d'avance, donc en l'espèce la vitesse de rotation, de l'unité 5 de soufflage, avec pour conséquence d'allonger temporellement ce cycle à cadence ralenti.

De fait, on va, via la centrale 9 de commande, et alors que la ligne 30 de production fonctionne suivant un premier cycle d'étapes opérées dans l'unité 5 de soufflage, à une première cadence C1 de cette machine :
- d'une part diminuer ladite cadence à une cadence C2 inférieure à la première cadence C1,
- et d'autre part ajouter une temporisation Tt par rapport au premier cycle, pendant ou après l'étape de dégazage, de sorte que le second cycle d'étapes soit donc temporellement allongé par rapport au premier cycle, étant considéré qu'un cycle donné comprend au moins une étape de soufflage et une étape de dégazage intérieur des récipients 2 formés, comme déjà indiqué.

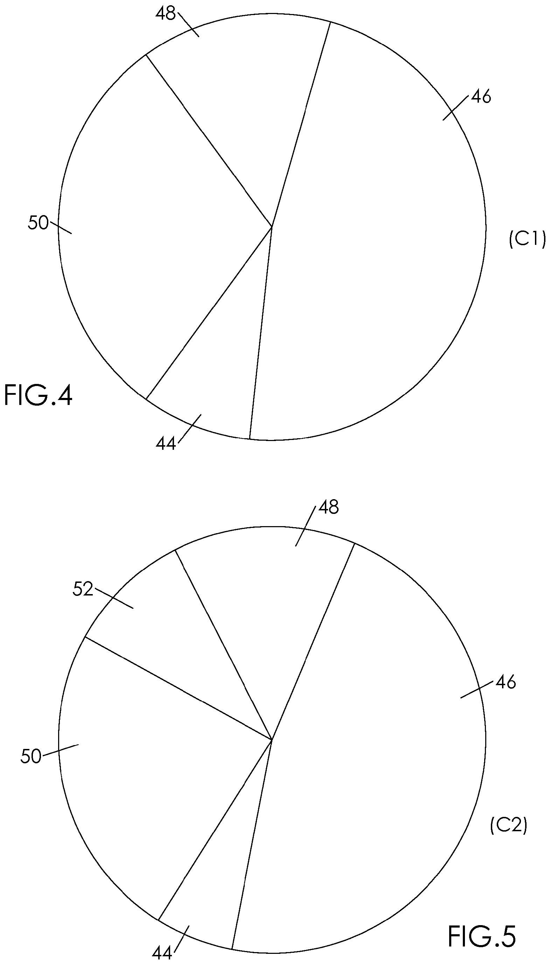

Les figures 4 et 5 schématisent cela avec, pour les deux cycles comparés C1 et C2, à chaque fois, dans l'exemple, une étape 44 de pré-soufflage suivie par une étape 46 de soufflage (que l'on a ici dissociées par souci d'une illustration claire), suivie par l'étape 48 de dégazage.

On considèrera que les durées des étapes d'un même cycle de moulage/soufflage sont chacune définies, pour leur début et leur fin, par les moments respectivement d'ouverture et de fermeture des vannes des conduits réservées pour les fluides utilisés lors des étapes de soufflage et de dégazage, telle que la vannes 28 de dégazage à l'air libre, la vanne 40 de balayage et la vanne 42 de soufflage (avec éventuel pré-soufflage).

Si le dégazage comprend un balayage de l'intérieur des récipients 2, la temporisation Tt sera ajoutée après ce balayage, de façon que sa durée, optimisée pour tous les récipients, ne soit pas altérée.

De fait, la temporisation Tt interviendra favorablement alors que l'intérieur des récipients 2 formés est à la pression atmosphérique. On pourra choisir de maintenir ouverte plus longtemps la vanne 28, ou la fermer et laisser ladite temporisation Tt s'écouler.

A ce sujet, il a été établi que cette temporisation lors du second cycle C2 (à cadence plus faible) pourrait durer entre 100 et 300 ms, ceci correspondant :
- à un allongement du temps de dégazage par rapport au temps de dégazage lors du premier cycle C1,
- ou à un intervalle temps réservé à l'issue de cette étape de dégazage, avant ouverture des moules.

Ainsi, la temporisation lors du second cycle d'étapes pourra correspondre à un allongement du temps de dégazage, par exemple de la durée précitée, par rapport au temps de dégazage lors du premier cycle d'étapes, ou à un tel intervalle de temps réservé à l'issue de cette étape de dégazage du second cycle d'étapes, avant ouverture des moules.

En tout état de cause, lors du second cycle C2 à cadence réduite, la durée de l'étape de soufflage (avec éventuel pré-soufflage) sera favorablement la même que celle de l'étape de soufflage du cycle C1, ce qui stabilisera en toute situation les pressions et temps de maintien sous pression des récipients dans les moules 6 de soufflage, évitant ainsi des variations de volumes et de prises d'empreintes.

Les figures 4 et 5 montrent en outre que, sur la machine de soufflage de l'exemple, on a maintenu pour chacune des étapes dudit second cycle C2 autres que l'étape 48 de dégazage les mêmes temps que ceux réservés à chacune de ces mêmes étapes lors du premier cycle d'étapes C1, à la première cadence (plus élevée).

Les « temps morts » 50, intermédiaires donc entre la fin de l'étape 48 de dégazage d'un cycle et le début de l'étape 44 de pré-soufflage du cycle suivant ont aussi été maintenus.

Et c'est donc naturellement que l'on voit apparaitre figure 5 cet intervalle tampon 52 lors du cycle C2, qui concerne la temporisation selon l'invention entre la fin de l'étape 48 de dégazage et le début des « temps morts » 50, pendant lesquels la pression dans les moules concernés peut donc être établie à l'ambiante.

## Revendications

1. Procédé pour former en récipients (2) des ébauches (3) en matière plastique, le procédé comprenant un cycle d'étapes incluant au moins des étapes (44, 46, 48) où on souffle dans les ébauches de façon à les former en récipients puis on dégaze intérieurement les récipients formés:
- on opère lesdites étapes suivant un premier cycle à une première cadence (C1), puis,
- lors d'un second cycle postérieur d'étapes s'opérant à une seconde cadence (C2) inférieure à la première cadence, on débute les étapes au même instant que pour le premier cycle et on ajoute une temporisation (Tt) par rapport au premier cycle, pendant ou après l'étape (48) de dégazage, de sorte que le second cycle est temporellement allongé par rapport au premier.

2. Procédé selon la revendication 1 où, pendant la temporisation, l'intérieur des récipients (2) formés est à la pression atmosphérique.

3. Procédé selon la revendication 1 ou 2 où, lors du second cycle, on maintient à l'étape (46) de soufflage la même durée que celle de l'étape (46) de soufflage du premier cycle.

4. Procédé selon l'une quelconque des revendications précédentes où un dit cycle d'étapes comprend :
- une étape où on place dans certains moules individuels, alors libres, des ébauches (3) préalablement chauffées, et on ferme ces moules (6, 60a, 60b),
- puis ladite étape où on souffle les ébauches préchauffées, pour obtenir des récipients (2),
- puis ladite étape où on dégaze les récipients (2) obtenus,
- puis une étape où on ouvre les moules des récipients dégazés et on en retire lesdits récipients.

5. Procédé selon l'une quelconque des revendications précédentes, où chaque étape (46) de soufflage, pendant laquelle on souffle dans les ébauches (3) à une seconde pression, inclut une étape (44) de pré-soufflage, pendant laquelle on souffle dans les ébauches (3) à une première pression inférieure à la seconde pression, et on maintient à l'étape de pré-soufflage du second cycle la même durée que celle de l'étape de pré-soufflage du premier cycle.

6. Procédé selon l'une quelconque des revendications précédentes, où :
- l'étape (48) de dégazage comprend un balayage de l'intérieur des récipients (2) à une pression intermédiaire entre une pression de soufflage mise en œuvre lors dudit soufflage dans les ébauches et la pression atmosphérique, et
- la temporisation (Tt) est ajoutée après ledit balayage.

7. Procédé selon l'une quelconque des revendications précédentes où, sur une unité 5 de soufflage où est opéré tout le procédé, et, lors du second cycle d'étapes et hormis pour ladite étape où on dégaze intérieurement les récipients (2) formés, on maintient, pour chacune des autres étapes du cycle (C2), les mêmes temps que ceux réservés à chacune de ces mêmes étapes lors du premier cycle (C1) d'étapes à la première cadence.

8. Procédé pour produire, suivant un premier puis un second cycle d'étapes, des récipients (2) remplis et bouchés, le procédé comprenant :
- suivant chaque cycle d'étapes, une étape de formage en récipients d'ébauches en matière plastique, avec le procédé selon l'une quelconque des revendications précédentes,
- une étape de remplissage des récipients formés,
- une étape de bouchage des récipients remplis,
- et/ou une étape d'étiquetage des récipients formés, avec :
- lors tant du premier que du second cycle d'étapes, un fonctionnement en continu de ces étapes de bouchage, remplissage et/ou étiquetage.

9. Procédé selon la revendication 8, où la cadence du premier cycle d'étapes (C1) correspond à la cadence maximale admissible.

## Patentansprüche

1. Verfahren zum Formen von Rohlingen (3) aus Kunststoff zu Behältern (2), wobei das Verfahren einen Zyklus von Schritten umfasst, der wenigstens Schritte (44, 46, 48) enthält, in denen in die Rohlinge geblasen wird, um sie zu Behältern zu formen, und anschließend die geformten Behälter innen entgast werden,
- wobei die Schritte gemäß einem ersten Zyklus mit einem ersten Takt (C1) ausgeführt werden, und dann
- in einem nachfolgenden zweiten Zyklus von Schritten, die mit einem zweiten Takt (C2) ausgeführt werden, der niedriger als der erste Takt ist, die Schritte zu demselben Zeitpunkt wie für den ersten Zyklus begonnen werden und eine Verzögerung (Tt) in Bezug auf den ersten Zyklus während oder nach dem Schritt (48) der Entgasung hinzugefügt wird, so dass der zweite Zyklus in Bezug auf den ersten zeitlich verlängert ist.

2. Verfahren nach Anspruch 1, wobei während der Verzögerung das Innere der geformten Behälter (2) unter atmosphärischem Druck steht.

3. Verfahren nach Anspruch 1 oder 2, wobei im zweiten Zyklus im Schritt (46) des Blasens dieselbe Dauer beibehalten wird, wie im Schritt (46) des Blasens des ersten Zyklus.

4. Verfahren nach einem der vorhergehenden Ansprüche, wobei ein solcher Zyklus von Schritten umfasst:
- einen Schritt, in dem in bestimmten einzelnen Formwerkzeugen, die gerade frei sind, vorgewärmte Rohlinge (3) angeordnet werden und diese Formwerkzeuge (6, 60a, 60b) geschlossen werden,
- anschließend den Schritt, in dem die vorgewärmten Rohlinge geblasen werden, um Behälter (2) zu erhalten,
- anschließend den Schritt, in dem die erhaltenen Behälter (2) entgast werden,
- anschließend einen Schritt, in dem die Formwerkzeuge der entgasten Behälter geöffnet werden.

5. Verfahren nach einem der vorhergehenden Ansprüche, wobei jeder Schritt (46) des Blasens, während dem mit einem zweiten Druck in die Rohlinge (3) geblasen wird, einen Schritt (44) des Vorblasens beinhaltet, während dem mit einem ersten Druck in die Rohlinge (3) geblasen wird, der niedriger als der zweite Duck ist, und wobei im Schritt des Vorblasens des zweiten Zyklus dieselbe Dauer beibehalten wird, wie im Schritt des Vorblasens des ersten Zyklus.

6. Verfahren nach einem der vorhergehenden Ansprüche, wobei:
- der Schritt (48) der Entgasung ein Spülen des Inneren der Behälter (2) mit einem Druck umfasst, der zwischen einem beim Blasen in die Behälter angewendeten Blasdruck und dem atmosphärischen Druck liegt, und
- die Verzögerung (Tt) nach dem Spülen hinzugefügt wird.

7. Verfahren nach einem der vorhergehenden Ansprüche, wobei auf einer Blaseinheit 5, wo das gesamte Verfahren durchgeführt wird, und während des zweiten Zyklus von Schritten, und außer für den Schritt, in dem die geformten Behälter (2) innen entgast werden, für jeden der anderen Schritte des Zyklus (C2) dieselben Zeiten beibehalten werden, wie die, welche für jeden dieser gleichen Schritte während des ersten Zyklus (C1) von Schritten mit dem ersten Takt reserviert sind.

8. Verfahren zur Herstellung, gemäß einem ersten und anschließend einem zweiten Zyklus von Schritten, von gefüllten und verschlossenen Behältern (2), wobei das Verfahren umfasst:
- gemäß jedem Zyklus von Schritten, einen Schritt des Formens von Rohlingen aus Kunststoff zu Behältern mit dem Verfahren nach einem der vorhergehenden Ansprüche,
- einen Schritt des Füllens der geformten Behälter,
- einen Schritt des Verschließens der gefüllten Behälter,
- und/oder einen Schritt des Etikettierens der geformten Behälter, mit:
- während sowohl des ersten als auch des zweiten Zyklus von Schritten, einer kontinuierlichen Funktionsweise dieser Schritte des Verschließens, Füllens und/oder Etikettierens.

9. Verfahren nach Anspruch 8, wobei der Takt des ersten Zyklus von Schritten (C1) dem zulässigen maximalen Takt entspricht.

## Claims

1. Method for forming into containers (2) blanks (3) made of plastic material, the method comprising a cycle of steps including at least steps (44, 46, 48) in which the blanks are blown into so as to form them into containers then the formed containers are internally degassed,
- said steps are carried out according to a first cycle at a first rate (C1), then,
- in a second later cycle of steps applied at a second rate (C2) slower than the first rate, the steps are begun at the same instant as for the first cycle and a time delay (Tt) is added relative to the first cycle, during or after the degassing step (48), so that the second cycle is temporally extended relative to the first.

2. Method according to Claim 1, in which, during the time delay, the interior of the formed containers (2) is at atmospheric pressure.

3. Method according to Claim 1 or 2, in which, in the second cycle, in the blowing step (46), the same duration as that of the blowing step (46) of the first cycle is maintained.

4. Method according to any one of the preceding claims, in which one said cycle of steps comprises:
- a step in which previously heated blanks (3) are placed in certain individual moulds, which are then free, and these moulds (6, 60a, 60b) are closed,
- then said step in which the preheated blanks are blown, to obtain containers (2),
- then said step in which the containers (2) obtained are degassed,
- then a step in which the moulds of the degassed containers are opened and said containers are removed therefrom.

5. Method according to any one of the preceding claims, in which each blowing step (46), during which the blanks (3) are blown into at a second pressure, includes a pre-blowing step (44), during which the blanks (3) are blown into at a first pressure lower than the second pressure, and, in the pre-blowing step of the second cycle, the same duration as that of the pre-blowing step of the first cycle is maintained.

6. Method according to any one of the preceding claims, in which:
- the degassing step (48) comprises a cleansing of the interior of the containers (2) at an intermediate pressure between a blowing pressure implemented in said blowing into the blanks and atmospheric pressure, and
- the time delay (Tt) is added after said cleansing.

7. Method according to any one of the preceding claims, in which, on a blowing unit 5 where all the method is carried out, and, in the second cycle of steps and except for said step in which the formed containers (2) are internally degassed, for each of the other steps of the cycle (C2), the same steps as those reserved for each of these same steps in the first cycle (C1) of steps are maintained at the first rate.

8. Method for producing, according to a first and then a second cycle of steps, filled and crowned containers (2), the method comprising:
- according to each cycle of steps, a step of forming blanks made of plastic material into containers, with the method according to any one of the preceding claims,
- a step of filling of the formed containers,
- a step of crowning of the filled containers,
- and/or a step of labelling of the formed containers, with:
- in both the first and the second cycles of steps, a continuous operation of these crowning, filling and/or labelling steps.

9. Method according to Claim 8, in which the rate of the first cycle of steps (C1) corresponds to the maximum admissible rate.
